# EUROPÄISCHE PATENTSCHRIFT

(11) **EP 0 947 727 B1**
(45) Veröffentlichungstag und Bekanntmachung des Hinweises auf die Patenterteilung: **08.10.2003**
(21) Anmeldenummer: 99104686.3
(22) Anmeldetag: 09.03.1999
(51) Int. Cl.: F16F 1/37, B60R 19/22, B32B 5/32

(54) **Energieabsorbierende Schaumstruktur**
Energy absorbing foam structure
Structure de mousse absorbant de l'energie

(30) Priorität: 13.03.1998 DE 19810871
(43) Veröffentlichungstag der Anmeldung: 06.10.1999
(73) Patentinhaber: Dynamit Nobel Kunststoff GmbH, 91781 Weissenburg (DE)
(72) Erfinder: Keller, Stefan, 97342 Seinsheim (DE); Wolf, Hans Jürgen Dr., 63179 Oberthausen (DE)
(74) Vertreter: Scherzberg, Andreas, Dr.

(56) Entgegenhaltungen:
- WO-A-99/00236
- DE-A- 4 432 082
- GB-A- 1 547 764
- US-A- 3 573 152
- US-A- 3 884 455
- US-A- 5 435 619

## Beschreibung

Die Erfindung betrifft eine energieabsorbierende Schaumstruktur in Stoßfängersystemen von Kraftfahrzeugen zur Aufnahme von Stoßenergien gemäß oberbegriff des Anspruchs 1. Ein derartiger stand der Technik ist aus der GB-A-1 547 764 bekannt.

Polymerschaumstoffe werden vielfältig zur Aufnahme von Stoßenergien eingesetzt. Sie haben dabei die Aufgabe, diese Energien durch Verrichtung von Verformungsarbeit abzubauen.

Polymerschäume werden z. B. als elastische Energieabsorber in Stoßfängersystemen von Personenkraftwagen eingesetzt, wobei der Schaumstoff einem Biegeträger vorgeschaltet ist, der wiederum an zwei nachgeschalteten Fahrzeuglängsträgern abgestützt und befestigt wird. Solche Stoßfängersysteme werden in der Regel derart dimensioniert, daß die beim Fahrzeugaufprall eingeleiteten Stoßenergien - in Europa bis 4 km/h und in den USA bis 5 mph - elastisch oder zumindest ohne sichtbare Schäden aufgenommen werden. Als Werkstoffe kommen für diese Anwendung als elastischer Energieabsorber expandierter Polypropylenschaum in der Dichte von 40 bis 100 g/dm³ oder ein offenzelliger halbharter Polyurethanschaum in der Dichte von 50 bis 170 g/dm³ zum Einsatz.

Aus Versicherungsgründen werden viele Fahrzeuge hinter dem Biegeträger des Frontstoßfängersystems mit Überlastschutzelementen für die Fahrzeuglängsträger ausgestattet, deren Aufgabe es ist, Schäden an den Längsträgem bis 15 km/h Aufprallgeschwindigkeit zu vermeiden. Gegenwärtig sind dafür meist metallische, dünnwandige Hohlkörper vorgesehen, vorzugsweise Rohrkonstruktionen, die eine Umsetzung der Stoßenergie in Verformungsarbeit durch Umstülpen, Beulen oder Knittern ermöglichen. Von Nachteil ist bei diesen Ausführungen die sich stark reduzierende Energieabsorption, wenn die Aufprallrichtung von der Längsachse der rohrförmigen Absorptionselemente abweicht.

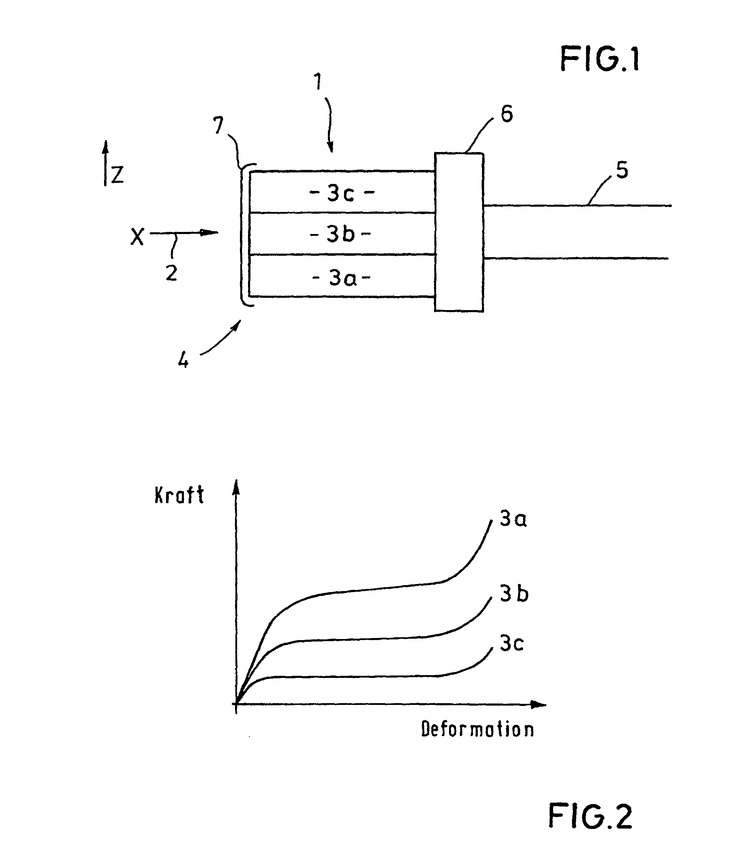

Ein weiterer Nachteil ist das senkrecht zur Krafteinleitungsrichtung (x-Richtung in Fig. 1) über der Höhe der Energieabsorptionsstruktur (z-Richtung in Fig. 1) konstante Energieabsorptionsvermögen, wodurch ein gedämpftes Abgleiten von aufprallenden Körpern (z. B. Beinaufprall) nicht erreicht wird.

Der Erfindung liegt die Aufgabe zugrunde, eine energieabsorbierende Schaumstruktur zur Aufnahme von Stoßenergien zu schaffen, mit der ein schadensfreier Aufprall bis 5 mph Aufprallgeschwindigkeit und ein gedämpftes Abgleiten von aufprallenden Körpern erreicht wird.

Erfindungsgemäß wird diese Aufgabe durch die Merkmale des Anspruchs 1 gelöst.

Die Kombination von Schichten mit unterschiedlichen Druckspannungen bewirkt einerseits eine Vernichtung der eingeleiteten Stoßenergien, zum anderen ein gedämpftes Abgleiten von aufprallenden Körpern (z. B. Beinaufprall). Unter Druckspannungen versteht man die wirkende Druckkraft, bezogen auf den beanspruchten Querschnitt eines Formkörpers.

Die Schaumstoffschichten bestehen vorteilhaft aus Polypropylenschaum, Polystrol oder Polyurethanschaum, wobei die Dichte bzw. das Raumgewicht der einzelnen Schaumstoffschichten unterschiedlich ist.

Die erfindungsgemäße energieabsorbierende Schaumstruktur wird durch Verbinden der einzelnen Schaumstoffschichten hergestellt.

Dies kann durch Formschluß geschehen, z. B. durch Zusammenstecken entsprechend geformter Schaumstoffteile. Man kann die Verbindung auch durch Kleben herbeiführen, z. B. mit handelsüblichen Schmelzklebern oder durch lösungsmittelfreie Klebstoffe.

Gemäß der Erfindung nimmt die Steifigkeit der einzelnen Schaumstoffschichten und damit deren Energieabsorptionsvermögen von einer Schicht zur anderen zu.

Die Erfindung ist an Hand der figuren nachfolgend beschrieben. Es zeigt:
- Fig. 1: schematisch ein Stoßfängersystem eines Kraftfahrzeugs im Querschnitt mit einer erfindungsgemäßen Schaumstruktur und
- Fig. 2: in einem Kraft-Deformations-Diagramm das Deformationsverhalten der einzelnen Schaumstoffschichten in Fig. 1.

Fig. 1 zeigt schematisch ein Stoßfängersystem eines Kraftfahrzeugs im Querschnitt. An einem Längsträger 5 ist ein Querträger 6 angeordnet, an dem eine erfindungsgemäße Schaumstruktur 1 angebracht ist. Abgedeckt ist die Schaumstruktur 1 mit einer Verkleidung 7, hier nur schematisch angedeutet.

Die Schaumstruktur 1 besteht aus drei parallel zur Krafteinleitungsrichtung 2 angeordneten Schaumstoffschichten 3a, 3b, 3c mit jeweils unterschiedlichem Energieabsorptionsvermögen. Die einzelnen Schaumstoffschichten sind miteinander verklebt und bestehen aus Polypropylenschaum, Polystrol oder Polyurethanschaum.

Die Steifigkeit dereinzelnen Schaumstoffschichten 3a, 3b, 3c nimmt von der obersten Schicht 3c bis zur untersten Schicht 3a stetig zu. Mit _{"}unten" ist die zum Boden bzw. zur Straße gewandte Seite gemeint.

Fig. 2 zeigt in einem Kraft-Deformations-Diagramm die Steifigkeit der einzelnen Schaumstoffschichten 3a, 3b, 3c. Die Schicht 3c hat die geringste Steifigkeit, d. h. schon bei einer geringen Kraft ergibt sich eine große Deformation. Bei der Schicht 3a hingegen muß die Kraft schon wesentlich größer sein, um dieselbe Deformation zu erreichen. Die Schicht 3b liegt in ihrem Deformationsverhalten bzw. in ihrer Steifigkeit genau zwischen dem Verhalten der Schichten 3a und 3c.

## Patentansprüche

1. Energieabsorbierende Schaumstruktur (1) in Stoßfängersystemen (4) von Kraftfahrzeugen zur Aufnahme von Stoßenergien, wobei die Schaumstruktur (1) aus Schaumstoffschichten (3a, 3b, 3c) mit unterschiedlichem Energieabsorptionsvermögen besteht, **dadurch gekennzeichnet, dass** die Schaumstruktur (1) aus mindestens zwei parallel zur Krafteinleitungsrichtung (2) vertikal übereinander angeordneten Schaumstoffschichten (3a, 3b, 3c) besteht, die Steifigkeit der Schaumstoffschichten (3a, 3b, 3c) von einer Schicht zur anderen zunimmt und die steifste Schicht (3a) im unteren Bereich, d. h. zur Straße hin, angeordnet ist.

2. Schaumstruktur nach Anspruch 1, **dadurch gekennzeichnet, dass** die Schaumstoffschichten (3a, 3b, 3c) aus Polypropylenschaum, Polystrol oder Polyurethanschaum bestehen.

3. Schaumstruktur nach Anspruch 1 oder 2, **dadurch gekennzeichnet, dass** die Dichte bzw. das Raumgewicht der einzelnen Schaumstoffschichten (3a, 3b, 3c) unterschiedlich ist.

4. Schaumstruktur nach einem der Ansprüche 1 bis 3, **dadurch gekennzeichnet, dass** die Schaumstoffschichten (3a, 3b, 3c) untereinander verbunden sind.

5. Schaumstruktur nach Anspruch 4, **dadurch gekennzeichnet, dass** die Schaumstoffschichten (3a, 3b, 3c) durch Formschluss, z. B. durch Zusammenstecken oder Zusammenkleben entsprechend geformter Schaumstoffteile verbunden sind.

## Claims

1. Energy-absorbing foam structure (1) in bumper systems (4) of motor vehicles for absorbing impact energies, the foam structure (1) consisting of foam material layers (3a, 3b, 3c) with different energy-absorption capacities, **characterised in that** the foam structure (1) consists of at least two foam material layers (3a, 3b, 3c) which are arranged vertically one on top of the other parallel to the direction of introduction of force (2), the rigidity of the foam material layers (3a, 3b, 3c) increases from one layer to the other and the most rigid layer (3a) is arranged in the lower region, that is, towards the road.

2. Foam structure according to claim 1, **characterised in that** the foam material layers (3a, 3b, 3c) consist of polypropylene foam, polystyrene or polyurethane foam.

3. Foam structure according to claim 1 or 2, **characterised in that** the density or the weight per unit of volume of the individual foam material layers (3a, 3b, 3c) is different.

4. Foam structure according to one of claims 1 to 3, **characterised in that** the foam material layers (3a, 3b, 3c) are connected together.

5. Foam structure according to claim 4, **characterised in that** the foam material layers (3a, 3b, 3c) are connected by form-closure, for example by fitting together or adhering together appropriately shaped foam material portions.

## Revendications

1. Structure de mousse (1) absorbant l'énergie dans des systèmes de pare-chocs (4) de véhicules automobiles, pour absorber l'énergie de choc, la structure de mousse (1) étant formée de couches de mousse (3a, 3b, 3c) avec des capacités d'absorption des chocs différentes, **caractérisée en ce que** la structure de mousse (1) comprend au moins deux couches de mousse (3a, 3b, 3c) disposées verticalement les unes au-dessus des autres, parallèlement à la direction (2) d'application des forces, la rigidité des couches de mousse (3a, 3b, 3c) croissant d'une couche à l'autre et la couche (3a) la plus rigide étant disposée dans la région inférieure, c'est-à-dire vers la chaussée.

2. Structure de mousse selon la revendication 1, **caractérisée en ce que** les couches de mousse (3a, 3b, 3c) sont formées de mousse de polypropylène, de polystyrène ou de mousse de polyuréthane.

3. Structure de mousse selon la revendication 1 ou 2, **caractérisée en ce que** la densité ou le poids spécifique des différentes couches de mousse (3a, 3b, 3c) est différent.

4. Structure de mousse selon une des revendications 1 à 3, **caractérisée en ce que** les couches de mousse (3a, 3b, 3c) sont liées entre elles.

5. Structure de mousse selon la revendication 4, **caractérisée en ce que** les couches de mousse (3a, 3b, 3c) sont liées par obstacle, par exemple par emboîtement ou par collage de pièces en mousse de forme adaptée.
